Europäisches Patentamt

European Patent Office

Office européen des brevets

(19)

(11) Publication number : **0 150 577**
**B1**

# EUROPEAN PATENT SPECIFICATION

(12)

(45) Date of publication of patent specification :
30.12.86

(51) Int. Cl.⁴ : **B 62 D   1/18**

(21) Application number : **84307917.9**

(22) Date of filing : **15.11.84**

(54) Vehicle steering column.

(30) Priority : **23.12.83 US 564580**

(43) Date of publication of application :
**07.08.85 Bulletin 85/32**

(45) Publication of the grant of the patent :
**30.12.86 Bulletin 86/52**

(84) Designated contracting states :
**BE DE FR GB IT NL SE**

(56) References cited :
**DE-A- 1 755 572**
**DE-A- 2 630 370**
**DE-B- 1 530 759**
**DE-B- 2 719 194**
**GB-A- 1 287 403**
**US-A- 3 693 997**
**US-A- 4 029 168**

(73) Proprietor : **GENERAL MOTORS CORPORATION**
**General Motors Building 3044 West Grand Boulevard**
**Detroit Michigan 48202 (US)**

(72) Inventor : **Beauch, Howard David**
**9930 West Tuscola**
**Frankenmuth Michigan, 48734 (US)**

(74) Representative : **Breakwell, John Neil Bower et al**
**GM Patent Section Luton Office (F6) P.O. Box No. 3**
**Kimpton Road**
**Luton Beds. LU2 OSY (GB)**

EP 0 150 577 B1

## Description

This invention relates to vehicle steering columns as specified in the preamble of claim 1, for example as disclosed in US-A-4 029 168.

Prior to the present invention, numerous tilt-type steering columns have been provided in vehicles to allow the operator to adjust the position of the steering wheel for optimizing driver comfort while driving the vehicle, and to facilitate vehicle entry and exit while the vehicle is stationary. Although these prior steering columns have met their objectives and are used in a wide range of vehicles, their complexity has grown along with the requirement for column-mounted devices such as ignition switches, column locks and windshield (windscreen) wiper and turn signal switches usually housed within the tilt head of the column. Furthermore, as is exemplified by the disclosure of the said US-A-4 029 168, many prior-art tilt head supports are complex zinc die-castings which are secured to tubular steel mast jackets by special threaded fasteners extending through openings provided in the castings and into aligned openings in the jacket.

The present invention is concerned with providing a new and improved tilt steering column for adjustment of the angular attitude of the steering wheel, incorporating a new shell-like tilt head support which is a light-weight component that is connected to the upper end of the tubular steel jacket assembly.

To this end, a vehicle steering column in accordance with the present invention is characterised by the features specified in the characterising portion of claim 1.

In this new and improved steering column, the tilt head support may be stamped from steel stock, and preferably is welded to the upper end of the tubular steel mast jacket of the steering column for optimizing the jointing of these parts. The new tilt head support then in effect represents an extension of the tubular steel jacket assembly.

Such new and improved stamped steel support can thereby constitute a light-weight unitized connector that provides for the pivoting of the tilt head assembly, good anchorage for locking shoes for the tilt head assembly, and retention of a tilt head spring which biases the tilt head to selected positions.

An intermediate bearing housing as utilised in the steering column of US-A-4 029 168 between the tilt head and the tilt head support is not required with the present construction of steering column.

An important optional feature is that the tilt head assembly may incorporate a separable switch housing assembly that provides for the plugging-in of selected switch modules for switches such as for instance for the turn signal and the windshield (windscreen) wiper. Such a switch housing assembly can be adapted to a wide range of switch modules, so permitting various configurations to be produced to meet varying design requirements for different vehicles.

A tilt-type vehicle steering column in accordance with the present invention is potentially easy to service and to repair or replace. Due to the new and improved tilt head support, manufacture is facilitated, since this part is readily stamped from sheet metal stock as a fixed design which does not require machining or other expensive finishing procedures.

In the drawings :

Figure 1 is a fragmentary side elevational view of a vehicle, with portions broken away to illustrate a tilt-type steering column in accordance with the present invention ;

Figure 2 is a fragmentary enlarged side view, with parts in section, of the tilt steering column of Figure 1 ;

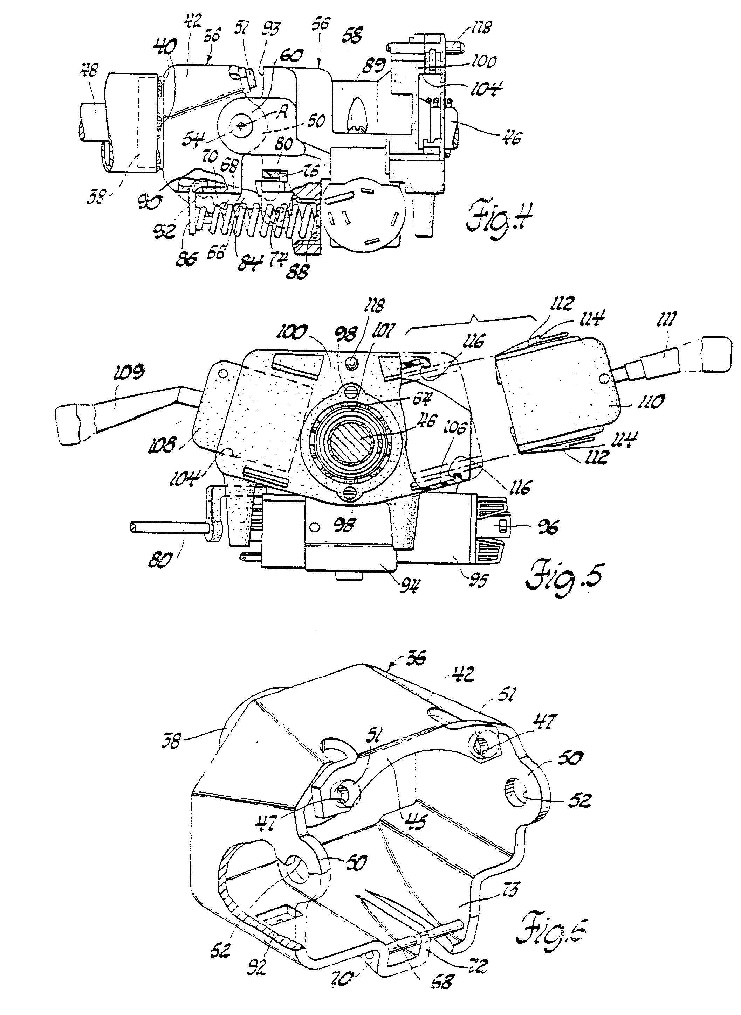

Figure 3 is a top view on the line 3-3 of Figure 2, in the direction of the arrows ;

Figure 4 is a side view of a tilt head assembly and tilt support on the line 4-4 of Figure 3, in the direction of the arrows ;

Figure 5 is a view on the line 5-5 of Figure 2, in the direction of the arrows ; and

Figure 6 is a perspective view of a tilt support forming part of the tilt steering column shown for example in Figure 2.

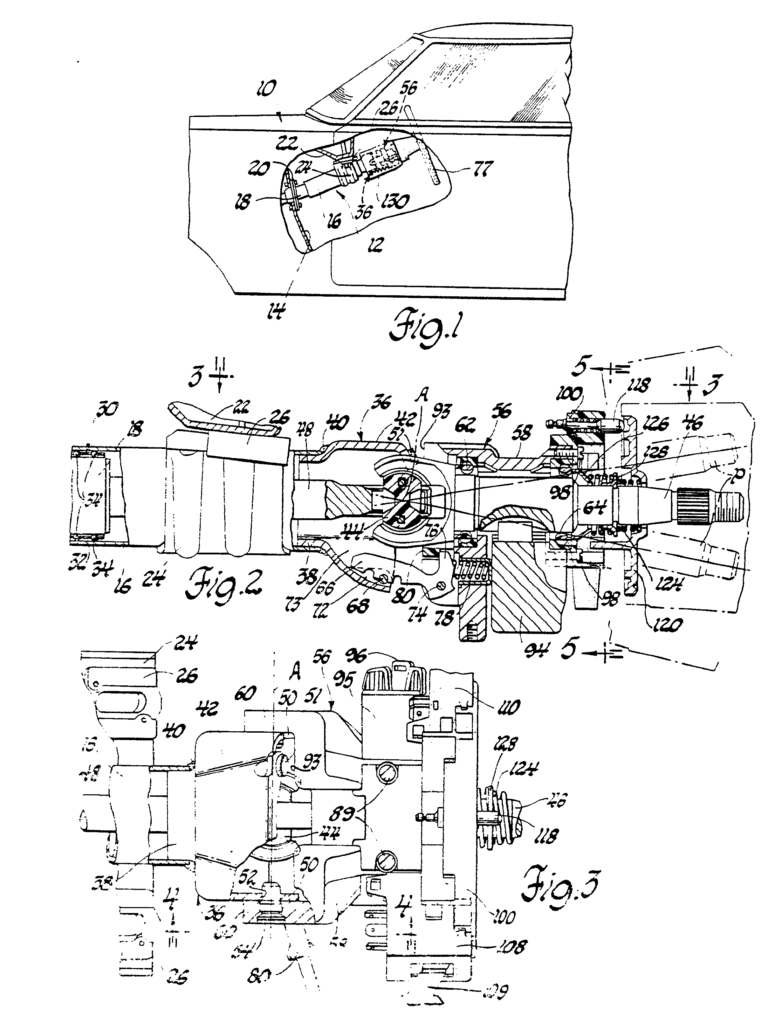

With reference now to Figure 1 of the drawings, there is shown a vehicle body 10 which has within its passenger compartment a steering column assembly 12 that extends therein through a forward bulkhead 14. More particularly, the steering column assembly includes upper and lower tubular steel jackets 16 and 18 normally secured in the illustrated telescopic relationship. The lower tubular jacket 18 is secured to the forward bulkhead 14 by a bracket 20. The upper tubular jacket 16 is mounted to stationary support structure such as the instrument panel 22 by a bracket assembly 24 including conventional release capsules 26 such as that shown by US-A-3 394 613.

Operatively mounted between the lower and upper tubular jackets 16 and 18 is a deforming ball unit 30 comprising a plastics sleeve 32 in which a plurality of hardened steel balls 34 are rotatably mounted. When these tubular jackets 16 and 18 are telescopically collapsed under a predetermined load, the balls 34 roll and deform the metal of the telescopically collapsing jackets, to dissipate energy of the load.

Fixed in the upper end of the upper jacket 16 is a tilt head support 36 stamped from steel sheet stock into a one-piece, hollow part of substantially uniform thickness with a cylindrical neck 38 which closely fits within the upper end of the tubular jacket 16. Welds 40 rigidly secure the tilt head support 36 to the upper jacket 16. The tilt head support 36 has a shell-like main body 42 extending upwardly from the neck 38 to accommodate a universal joint 44 interconnecting upper and lower cylindrical steering shafts 46 and 48 of the steering column assembly 12. The lower steering shaft 48 extends through the mast jacket 18 into driving connection with a conventional intermediate shaft and coupling for actuating a steering gear (not shown) for turning the dirigible wheels (also not shown) of the vehicle 10.

The main body 42 of the tilt head support 36 terminates in a downwardly inclined stop plate 45 which has openings 47 at opposite ends thereof to receive elastomeric bumpers 51. These bumpers provide an 'up' stop for the tilt head assembly described below.

Formed in the side walls of the main body 42 of the tilt head support 36 are a pair of laterally spaced side ears 50 which have aligned openings 52 that receive laterally extending pivot pins 54 which pivotally mount a tilt head assembly 56 to the support assembly 36 for turning movement with respect to a horizontal axis A to selected tilt positions. The tilt head assembly 56 comprises a central body or housing assembly 58 cast from aluminium or other light-weight metal, with projecting ears 60 which fit over the corresponding ears of the tilt head support 36 and carry the pivot pins 54. In the installed position, the pivot pins 54 are in axial alignment with the pivot centre of the universal joint 44.

The housing assembly 58 has a cylindrical opening therein through which the upper steering shaft 46 extends. Ball-bearing assemblies 62 and 64 mounted internally in the housing assembly 58 support the upper steering shaft 46 for rotation therein. Conventional locking shoes, exemplified by locking shoe 66, are provided to releasably secure the tilt head assembly 56 in an adjusted tilt position. Various tilt positions are shown by phantom line positions P in Figure 2. The locking shoe 66 has a free end with arcuately spaced notches on the lower side thereof that are selectively engageable with a locking pin 68, mounted between walls 70, 72 and 73 formed in the stamped tilt head support 36, to set the angular tilt position of the tilt head assembly 56.

Each locking shoe 66 is pivotally mounted on the steering column housing assembly by a pivot pin 74, and has a crank arm 76 extending upwardly therefrom. A helical spring such as spring 78 supported in the steering column housing assembly 58 seats against the upper side of the crank arm 76 to turn the associated locking shoe counterclockwise as seen in Figure 2, to yieldably hold the locking shoe in locking engagement with the pin 68. An actuator lever 80 extends from a pivot mounting, not shown, within the steering column housing assembly 58 to the exterior thereof while engaging the forward side of the crank arm 76.

By manually turning the actuator lever 80 on its pivot towards the steering wheel 77, which is carried on the splined free upper end of the steering shaft 46, the force of the locking shoe spring 78 is overcome, and the locking shoe 66 is turned clockwise to be released from the lock pin 68 so that the tilt head assembly 56 can be tilted to a new selected position. In preferred practice, two locking shoes are utilized in side-by-side relationship, operated by a single lever, with the spacing of the locking notches in the two shoes different to increase the number of tilt-locking positions.

The tilt head assembly 56 is biased upwardly by a helical tilt spring 84 having a lower end secured to a fixed spring guide 86. The other end of the spring 84 extends into a spring retainer 88 mounted in the steering column housing assembly 58. The spring guide 86 has a right-angled upper end 90 which fits through a lower slot 92 and seats against an inner surface of the tilt head support under the force of the spring 84. The upward movement of the tilt head assembly is limited by contact of the inner wall 93 of the steering column housing assembly with the elastomeric bumpers 51. With this construction, the tilt spring 84, the spring guide 86 and the spring retainer 88 can easily be removed, and serviced and replaced if necessary.

Secured to the underside of the steering column housing assembly 58 by shear bolts 89 is a locking cylinder 94 and an associated ignition switch assembly 95 operated by a removable ignition key 96. The heads of these bolts may be torqued so that they shear from their shanks on installation to deter subsequent unauthorized removal of the ignition switch assembly.

Secured to the upper end of the steering column housing assembly 58 by threaded fasteners 98 is a generally rectangular switch housing assembly 100 of plastics material. This housing assembly has an annular longitudinally extending opening 101 through which the upper steering shaft 46 extends. The perimeter of the switch housing seats against the top of the tilt housing 58. The switch housing assembly 100 has lateral (side) openings 104 and 106 on opposite sides thereof which accommodate plug-in switch assemblies 108 and 110, respectively for a turn signal control and for windshield wipers. The switch 108 is actuated by a manual lever 109, and the switch 110 is actuated by a manual lever 111. The sides of these switches have integral arms 112 which are sprung outwardly and are provided with locking shoulders 114 for spring-locking engagement with side catches 116 formed in the switch housing when the switches are inserted into the corresponding side opening in the switch housing assembly. With the switches installed, the free end of the arms 112 can be depressed so that the locking shoulders 114 are cleared from the associated catches 116 to permit easy withdrawal of the switches from the housing assembly. With this construction, switches can easily be removed for repair or replacement as necessary. Also, a wide variety of switch designs can be utilized to suit particular requirements of different vehicles employing this steering column assembly.

The signal switch housing assembly 100 has a central axial opening through which a spring-biased horn contact plunger 118 extends. This contact plunger is actuated by means of a horn contact plate 120 mounted on the upper steering shaft 46. A spring 124 seated on a spring seat 128 yieldably holds the spring plate in the position shown in Figure 2, ready for manual depression to actuate the horn circuitry. A cylindrical cover 130 is attached to the steering column housing assembly to provide a finely finished appearance for the tilt head assembly.

**Claims**

1. A vehicle steering column comprising a tubular steel jacket assembly (16) adapted to be operatively mounted in a vehicle, a stationary tilt head support (36) secured to an upper end of the tubular jacket assembly (16), a tilt head assembly (56) having a steering wheel (77) operatively mounted thereon, the tilt head assembly (56) including a central body (58), first pivot means (54) mounting the central body (58) of the tilt head assembly (56) to the stationary tilt head support (36) for limited tilting movement with respect to a horizontal axis of rotation (A) extending through the first pivot means (54), a lower steering shaft (48) extending axially through the jacket assembly (16), an upper steering shaft (46) extending through the central body (58) and forming part of the tilt head assembly (56) and terminating in operative connection with the steering wheel, second pivot means (44) operatively aligned with the first pivot means (54) and connecting the lower steering shaft (48) to the upper steering shaft (46) for limited tilting movement with the tilt head assembly (56) with respect to the said horizontal axis (A), bearing means (62, 64) mounting the upper steering shaft (46) for axial rotation within the central body (58) of the tilt head assembly (56), releasable locking means (66) mounted on the central body (58) for releasably connecting the tilt head assembly (56) and the upper steering shaft (46) at selected angular positions with respect to the stationary tilt head support (36), and securement means (40) rigidly connecting the stationary tilt head support (36) to the upper end of the jacket assembly (16), characterised in that the stationary tilt head support (36) comprises a shell manufactured from metallic sheet stock, the shell having substantially uniform wall thickness and having an enlarged cup-like main body (42) mounting the said first pivot means (54), and further having a neck portion (38) extending from the main body (42) into close interfitting connection with respect to the upper end of the jacket assembly (16), and fastener means (40) directly connecting the stationary tilt head support (36) to the upper end of the jacket assembly (16).

2. A vehicle steering column according to claim 1, characterised in that a signal switch housing assembly (100) is secured to the main body (58) of the tilt head assembly (56).

3. A vehicle steering column according to claim 2, characterised in that the signal switch housing assembly (100) incorporates plug-in switches (108, 110) releasably secured in the housing assembly (100).

4. A vehicle steering column according to claim 2, characterised in that the signal switch housing assembly (100) forms an upper end of the tilt head assembly (56) and incorporates plug-in signal switches (108, 110).

5. A vehicle steering column according to any one of claims 1 to 4, characterised in that the first pivot means comprises one or more pivot pins (54) pivotally securing the tilt head assembly (56) to the fixed support (36), and that the second pivot means comprises a drive-type universal joint (44).

6. A vehicle steering column assembly according to any one of claims 1 to 5, characterised in that the shell (42) of the stationary tilt head support (36) is stamped from steel sheet stock.

7. A vehicle steering column assembly according to any one of claims 1 to 6, characterised in that the neck portion of the stationary tilt head support (36) comprises a tubular neck (38) which extends into the upper end of the jacket assembly (16) and is secured thereto by welds (40) constituting the said fastener means.

8. A vehicle steering column assembly according to any one of claims 1 to 7, characterised in that the upper steering shaft (46) forms a central component of the tilt head assembly (56), and that the steering wheel (77) is connected to a free upper end portion of the upper steering shaft (46).

9. A vehicle steering column assembly according to any one of claims 1 to 8, characterised in that a helical tilt spring (84) is operatively interposed between the tilt head support (36) and the tilt head assembly (56) for urging the tilt head assembly (56) in a turning movement with respect to the first pivot means (54), a spring guide (86) is removably mounted into the wall of the cup-like main body (42), the spring guide (86) has a lower end extending downwardly from the main body (42) to seat one end of the helical tilt spring (84), and means (88) is disposed in the tilt head assembly (56) for seating the other end of the tilt spring (84).

**Patentansprüche**

1. Fahrzeug-Lenksäule mit einer rohrförmigen Stahlmantelanordnung (16), die zum wirksamen Einbauen in ein Fahrzeug ausgelegt ist, einer stationären Kippkopf-Stütze (36), die an einem oberen Ende der rohrförmigen Mantelanordnung (16) befestigt ist, einer Kippkopf-Anordnung (56) mit einem daran wirksam angebrachten Lenkrad (77), wobei die Kippkopf-Anordnung (56) gebildet ist von einem Zentralgehäuse (58), einem ersten Schwenkmittel (54), das den Zentralkörper (58) der Kippkopf-Anordnung (56) an der stationären Kippkopf-Stütze (36) zu einer begrenzten Kippbewegung bezüglich einer sich durch das erste Schwenkmittel (54) erstreckenden horizontalen Rotationachse (A) befestigt, einer unteren Lenkwelle (48), die sich axial durch die Mantelanordnung (16) erstreckt, einer oberen Lenkwelle (46) die sich durch den Zentralkörper (58) erstreckt, einen Teil der Kippkopf-Anordnung (56) bildet und in Wirkverbindung mit dem Lenkrad ausläuft, einem zweiten, wirksam mit dem ersten Schwenkmittel (54) ausgerichteten Schwenkmittel (44) das die untere Lenkwelle (48) mit der oberen Lenkwelle (46) zu einer begrenzten Kippbewegung mit der Kippkopf-Anordnung (56) bezüglich der horizontalen Achse (A) verbindet, die obere Lenkwelle (46) zu einer axialen Rotation innerhalb des Zentralgehäuses (58) der Kippkopf-Anordnung (56) befestigende Lagermittel (62, 64), lösbare Sperrmittel (66), die an dem Zentralgehäuse zur lösbaren Verbindung der Kippkopf-Anordnung (56) mit der oberen Lenkwelle (46) in ausgewählten Winkelstellungen bezüglich der stationären Kippkopf-Stütze (36) angebracht sind, und Sicherheitsmittel (40), die starr die stationäre Kippkopf-Stütze (36) mit dem oberen Ende der Mantel-Anordnung (16) verbinden, dadurch gekennzeichnet, daß die stationäre Kippkopf-Stütze (36) eine aus Metallblechmaterial gefertige Hülle umfaßt, wobei die Hülle im wesentlichen einheitliche Wandstärke besitzt und ein vergrößertes schlüsselförmiges Hauptgehäuse (42) aufweist, das das erste Schwenkmittel (54) festlegt, und weiter einen Halsabschnitt (38) besitzt, der sich vom Hauptgehäuse (42) in enger Formschlußverbindung mit Bezug auf das obere Ende der Mantel-Anordnung (16) erstreckt, und daß direkt die stationäre Kippkopf-Stütze (36) mit dem oberen Ende der Mantel-Anordnung (16) verbindende Befestigungsmittel (40) vorgesehen sind.

2. Fahrzeug-Lenksäule nach Anspruch 1, dadurch gekennzeichnet, daß eine Signalschalter-Gehäuseanordnung (100) an dem Hauptgehäuse (58) der Kippkopf-Anordnung (56) befestigt ist.

3. Fahrzeug-Lenksäule nach Anspruch 2, dadurch gekennzeichnet, daß die Signalschalter-Gehäuseanordnung (100) lösbar in der Gehäuseordnung (100) gesicherte Einsteck-Schalter (108, 110) enthält.

4. Fahrzeug-Lenksäule nach Anspruch 2, dadurch gekennzeichnet, daß die Signal-Schalter-Gehäuseanordnung (100) ein oberes Ende der Kippkopf-Anordnung (56) bildet und Einsteck-Signalschalter (108, 110) enthält.

5. Fahrzeug-Lenksäule nach einem der Ansprüche 1 bis 4, dadurch gekennzeichnet, daß das erste Schwenkmittel einen oder mehrere Schwenkstifte (54) umfaßt, die schwenkbar die Kippkopf-Anordnung (56) an der festen Stütze (36) befestigen, und daß das zweite Schwenkmittel ein Antriebsart-Universalgelenk (44) umfaßt.

6. Fahrzeug-Lenksäuleanordnung nach einem der Ansprüche 1 bis 5, dadurch gekennzeichnet, daß die Hülle (42) der stationären Kippkopf-Stütze (36) aus Stahlblech-Material gestanzt ist.

7. Fahrzeug-Lenksäuleanordnung nach einem der Ansprüche 1 bis 6, dadurch gekennzeichnet, daß der Halsabschnitt der stationären Kippkopf-Stütze (36) einen rohrförmigen Hals (38) umfaßt, der sich in das obere Ende der Mantelanordnung (16) hinein erstreckt und daran durch die Befestigungsmittel bildende Schweißungen (40) befestigt ist.

8. Fahrzeug-Lenksäulenanordnung nach einem der Ansprüche 1 bis 7, dadurch gekennzeichnet, daß die obere Lenksäule (46) einen Zentralbestandteil der Kippkopf-Anordnung (56) bildet und daß das Lenkrad (77) mit einem freien oberen Endabschnitt der oberen Lenkwelle (46) verbunden ist.

9. Fahrzeug-Lenksäulenanordnung nach einem der Ansprüche 1 bis 8, dadurch gekennzeichnet, daß eine wendelförmige Kippfeder (84) wirksam zwischen die Kippkopf-Stütze (36) und die Kippkopf-Anordnung (56) eingesetzt ist, um die Kippkopf-Anordnung (56) in eine Drehbewegung bezüglich des ersten Schwenkmittels (54) zu drängen, daß eine Federführung (86) entfernbar in der Wand des schüsselförmigen Hauptkörpers (42) angebracht ist, daß die Federführung (86) ein sich vom Hauptkörper (42) nach unten erstreckendes unteres Ende zur Aufnahme eines Endes der wendelförmigen Kippfeder (84) besitzt und daß Mittel (88) in der Kippkopf-Anordnung (56) zum Aufnehmen des anderen Endes der Kippfeder (84) vorgesehen sind.

## Revendications

1. Colonne de direction pour véhicule comprenant un ensemble fourreau tubulaire en acier (16) adapté pour être monté fonctionnellement dans un véhicule, un support de tête inclinable fixe (36) fixé à une extrémité supérieure de l'ensemble fourreau tubulaire (16), un ensemble tête inclinable (56) sur lequel est monté fonctionnellement un volant de direction (77), l'ensemble tête inclinable (56) comprenant un corps central (58), des premiers moyens d'articulation (54) qui supportent le corps central (58) de l'ensemble tête inclinable (56) sur le support fixe (36) de la tête inclinable, pour lui permettre de décrire un mouvement d'inclinaison limité par rapport à un axe de rotation horizontal (A) qui passe par les premiers moyens d'articulation (54), un arbre de direction inférieur (48) qui s'étend axialement à travers l'ensemble fourreau (16), un arbre de direction supérieur (46) qui traverse le corps central (58) et fait partie de l'ensemble tête inclinable (56) et se termine en liaison fonctionnelle avec le volant de direction, des deuxièmes moyens d'articulation (44) alignés fonctionnellement sur les premiers moyens d'articulation (54) et qui relient l'arbre de direction inférieur (48) à l'arbre de direction supérieur (46) pour lui permettre de décrire un mouvement d'inclinaison limité avec l'ensemble tête inclinable (56) par rapport audit axe horizontal (A), des moyens de paliers (62, 64) qui portent l'arbre de direction supérieur (46) pour lui permettre de décrire une rotation axiale dans le corps central (58) de l'ensemble tête inclinable (56), des moyens de verrouillage déverrouillables (66) montés sur le corps central (58) pour relier avec possibilité de déplacement l'ensemble tête inclinable (56) et l'arbre de direction supérieur (46) au support fixe (36) de la tête inclinable dans des positions angulaires choisies et des moyens de fixation qui relient rigidement le support fixe (36) de la tête inclinable à l'extrémité supérieure de l'ensemble fourreau (16) caractérisé en ce que le support fixe (36) de la tête inclinable comprend une coquille fabriquée en tôle, la coquille possédant une épaisseur de paroi à peu près uniforme et comprenant un corps principal agrandi (42) en forme de cuvette, qui porte lesdits premiers moyens d'articulation (54), et, en outre, une partie collet (38) qui fait saillie sur le corps principal (42) pour se monter étroitement ajustée à l'extrémité supérieure de l'ensemble fourreau (16), et des moyens de fixation (40) qui relient directement le support fixe (33) de la tête inclinable à l'extrémité supérieure de l'ensemble fourreau (16).

2. Colonne de direction pour véhicule selon la revendication 1, caractérisée en ce qu'un ensemble boîtier d'interrupteurs de signaux (100) est fixé au corps principal (58) de l'ensemble tête inclinable (56).

3. Colonne de direction pour véhicule selon la revendication 2, caractérisée en ce que l'ensemble boîtier d'interrupteurs de signaux (100) comprend des interrupteurs embrochables (108, 110) fixés de façon amovible dans l'ensemble boîtier (100).

4. Colonne de direction pour véhicule selon la revendication 2, caractérisée en ce que l'ensemble boîtier d'interrupteurs de signaux (100) forme une extrémité supérieure de l'ensemble tête inclinable (56) et comprend des interrupteurs de signaux embrochables (108, 110).

5. Colonne de direction pour véhicule selon une quelconque des revendications 1 à 4, caractérisée en ce que les premiers moyens d'articulation comprennent un ou plusieurs tourillons (54) qui articulent l'ensemble tête inclinable (56) sur le support fixe (36) et en ce que les deuxièmes moyens d'articulation comprennent un joint universel (44) du type transmission.

6. Ensemble colonne de direction pour véhicule selon une quelconque des revendications 1 à 5, caractérisé en ce que la coquille (42) du support fixe (36) de la tête inclinable est formée par emboutissage de tôle d'acier.

7. Ensemble de colonne de direction selon une quelconque des revendications 1 à 6, caractérisé en ce que la partie collet du support fixe (36) de la tête inclinable comprend un collet tubulaire (38) qui pénètre dans l'extrémité supérieure de l'ensemble fourreau (16) et est fixé à cette extrémité par des soudures (40) qui constituent lesdits moyens de fixation.

8. Ensemble de colonne de direction pour véhicule selon une quelconque des revendications 1 à 7, caractérisé en ce que l'arbre de direction supérieur (46) forme un élément central de l'ensemble tête inclinable (56) et en ce que le volant de direction (77) est relié à une partie d'extrémité supérieure libre de l'arbre de direction supérieur (46).

9. Ensemble de colonne de direction pour véhicule selon une quelconque des revendications 1 à 8, caractérisé en ce qu'un ressort d'inclinaison hélicoïdal (84) est interposé fonctionnellement entre le support (36) de la tête inclinable et l'ensemble tête inclinable (56) pour tendre à faire tourner l'ensemble tête inclinable (56) par rapport aux premiers moyens d'articulation (54), un guide de ressort (86) est monté amovible dans la paroi du corps principal en cuvette (42), le guide de ressort (86) possède une extrémité inférieure qui s'étend vers le bas à partir du corps principal (42) pour donner appui à une première extrémité du ressort d'inclinaison hélicoïdal (84) et des moyens (88) sont disposés dans l'ensemble tête inclinable (56) pour donner appui à l'autre extrémité du ressort d'inclinaison (84).

Fig.1

Fig.2

Fig.3

Fig.4

Fig.5

Fig.6

2